# FASCICULE DE BREVET EUROPEEN

(11) **EP 3 218 176 B1**
(45) Date de publication et mention de la délivrance du brevet: **28.08.2019**
(21) Numéro de dépôt: 15797913.9
(22) Date de dépôt: 12.11.2015
(51) Int. Cl.: B29D 30/38, B23K 26/00, B29B 15/08, B29C 70/20, B29K 267/00, B23K 26/08, B23K 26/38, B23K 26/402, B29K 277/00, B23K 103/00

(54) **PROCEDE DE FABRICATION D'UNE BANDELETTE DE GOMME COMPRENANT DES RENFORTS DISCONTINUS**
VERFAHREN ZUR HERSTELLUNG EINES STREIFENS AUS KAUTSCHUK MIT UNTERBROCHENEN VERSTÄRKUNGEN
METHOD FOR PRODUCING A STRIP OF RUBBER INCLUDING NON-CONTINUOUS REINFORCEMENTS

(30) Priorité: 12.11.2014 FR 1460895
(43) Date de publication de la demande: 20.09.2017
(73) Titulaire: Compagnie Générale des Etablissements Michelin, 63000 Clermont-Ferrand (FR)
(72) Inventeur: PIALOT, Frédéric, 63040 Clermont-Ferrand Cedex 9 (FR); DAUMAS, Franck, 63040 Clermont-Ferrand Cedex 9 (FR); SEVAILLE, Alain, 63040 Clermont-Ferrand Cedex 9 (FR)
(74) Mandataire: Noel, Luminita
(86) Numéro de dépôt international: PCT/EP2015/076460
(87) Numéro de publication internationale: WO 2016/075251

(56) Documents cités:
- EP-A1- 0 732 227
- US-A- 3 570 574
- US-A- 3 844 327
- US-A- 5 935 354
- US-A- 6 027 786
- US-A1- 2009 050 611

## Description

L'invention se situe dans le domaine de la fabrication de pneumatiques et elle concerne plus particulièrement la fabrication d'une bandelette de gomme comprenant des renforts discontinus.

Par pneumatique ou enveloppe, on entend le produit fini, vulcanisé, et destiné à être monté sur une jante d'une roue. Et, par ébauche de pneumatique, on entend le produit intermédiaire formé, avant vulcanisation, par l'assemblage de différents produits semi-finis prenant la forme de nappes de gomme, éventuellement renforcées ou complexées avec un autre produit semi-fini, de profilés de gomme, éventuellement complexés entre eux, de tringles métalliques, etc.

Dans la conception de certaines parties d'un pneumatique, il peut être utile de prévoir des renforts discontinus.

Par exemple, le document WO-2011/067211 décrit un pneumatique dont les flancs comprennent des renforts discontinus et disposés le long de cercles concentriques à l'axe de rotation du pneumatique, c'est-à-dire dans des directions circonférentielles du pneumatique. Dans ce document WO-2011/067211, les renforts discontinus sont utilisés pour rigidifier la partie basse des flancs du pneumatique et réduire l'épaisseur de l'élément de bourrage présent dans cette partie basse des flancs. Grâce à cette réduction de volume, l'élément de bourrage dissipe moins d'énergie lorsque le pneumatique se déforme, et donc la résistance au roulement de ce pneumatique diminue. Parallèlement, ce document WO-2011/067211 indique aussi que, de façon surprenante, la discontinuité des renforts permet aussi de réduire la résistance au roulement du pneumatique.

Selon un autre exemple, le document US-3.570.574 décrit un pneumatique dans lequel la ceinture, ou l'armature, enveloppant la carcasse du pneumatique est constituée d'une ou plusieurs nappes avec des renforts discontinus dits à zéro degré car disposés avec un angle de 0 à 10° par rapport au plan médian perpendiculaire à l'axe de rotation du pneumatique. Dans ce document US-3.570.574, la discontinuité des renforts est destinée à permettre l'expansion radiale de la nappe lors du supplément de conformation subi par l'ébauche de pneumatique dans un moule de vulcanisation.

Dans un objectif similaire, le document EP-0.828.619 prévoit la présence d'une nappe comportant des renforts discontinus à zéro degré dans l'armature enveloppant la carcasse radiale d'un pneumatique. Ce document EP-0.828.619 envisage en outre une méthode de fabrication d'une nappe pour un pneumatique consistant à fabriquer une bandelette composée d'au moins cinq rangées jointives de câbles métalliques discontinus et enrobés de mélange caoutchouteux, à enrouler cette bandelette sur une bobine à l'aide d'un intercalaire, et à dérouler cette bandelette pour l'enrouler en spirale autour d'une forme qui peut être un tambour cylindrique ou une ébauche de pneumatique. Cette méthode est avantageuse car une même bandelette peut être utilisée pour confectionner des nappes de différentes largeurs et donc des pneumatiques de différentes dimensions.

Toutefois, ce document EP-0.828.619 ne précise pas de méthode d'obtention d'une bandelette à renforts discontinus.

Aussi, le document US-3.844.327 décrit un procédé de fabrication d'une nappe comprenant des renforts discontinus. Il est à noter que, à la différence du document précédent, ce document US-3.844.327 prévoit d'utiliser une nappe avec des renforts discontinus : en tant que nappe carcasse avec ses renforts disposés radialement autour de l'axe de rotation du pneumatique, ou d'utiliser des nappes avec des renforts discontinus par paire et comme nappes sommet de travail, les renforts de ces deux nappes sommet de travail se croisant et étant disposés symétriquement de part et d'autre du plan médian perpendiculaire à l'axe de rotation du pneumatique.

Selon le procédé de fabrication décrit dans ce document US-3.844.327, une nappe est d'abord fabriquée avec des renforts continus enrobés dans une matrice caoutchouteuse, puis les renforts continus sont découpés mécaniquement. A cet effet, ce document US-3.844.327 prévoit un dispositif de découpe comprenant un rouleau support et un rouleau de découpe entre lesquels passe la nappe avec ses renforts continus, le rouleau de découpe étant muni d'une pluralité de lames réparties dans sa longueur et sur toute sa circonférence. Plus en détail, le rouleau de découpe comprend plusieurs rangées de lames dans sa longueur, et les lames de deux rangées adjacentes sont décalées radialement autour de l'axe du rouleau de découpe de façon à obtenir un décalage entre les découpes de deux renforts adjacents.

S'il permet effectivement d'obtenir une nappe avec des renforts discontinus, le dispositif de découpe décrit dans ce document US-3.844.327 présente aussi différents inconvénients.

D'une part, ce dispositif de découpe offre peu d'adaptabilité car les positions des lames sur le rouleau de découpe doivent être adaptées aux positions des renforts dans la nappe et à l'espacement souhaité entre deux découpes d'un même renfort dans la longueur de la nappe.

D'autre part, lorsque le renfort prend la forme d'un ensemble de fils tressés ou torsadés, les lames du rouleau de découpe effectuent des coupes mécaniques qui laissent foisonner, c'est-à-dire s'écarter les unes des autres, les extrémités des fils dans la nappe. Et, de tels foisonnements de fils dans la nappe ne sont pas souhaitables car ils peuvent réduire la cohésion entre les extrémités des fils et la gomme de la nappe, et ainsi initier des fissures dans la gomme dont la propagation viendrait diminuer la performance d'endurance du pneumatique fabriqué avec cette nappe.

Toujours de manière mécanique mais dans l'objectif de découper en tronçons les renforts d'une nappe de renforts à zéro degré, le document EP-0.732.227 propose un dispositif de découpe comprenant un support de référence assimilable à une table et sur lequel la nappe est déplacée longitudinalement, et au moins un couteau se déplaçant transversalement au-dessus de la nappe et descendant vers la nappe à la manière d'une guillotine pour couper plusieurs renforts adjacents simultanément. Avantageusement, le dispositif de découpe comprend aussi une barre transversale permettant de maintenir la nappe lors de l'action de coupe du couteau sur les renforts.

En raison de la longueur du couteau et de sa mobilité transversale, le dispositif de découpe présenté dans ce document EP-0.732.227 offre plus d'adaptabilité que celui décrit dans le document US-3.844.327. En effet, le couteau de ce dispositif de découpe permet de découper plusieurs renforts juxtaposés, et cela quel que soit l'écartement entre les renforts dans la largeur de la nappe.

Toutefois, ce couteau présente aussi l'inconvénient de ne pas permettre une découpe sélective des renforts. Ainsi, le couteau ne permet pas de décaler les découpes de deux renforts adjacents. De plus, dans le cas d'une nappe comprenant d'autres éléments longitudinaux parallèles aux renforts, ces éléments longitudinaux seront coupés avec les renforts, ce qui peut s'avérer gênant lorsque ces éléments longitudinaux servent à conférer une certaine tenue mécanique à la nappe notamment en vue de son assemblage avec d'autres produits semi-finis.

Enfin, le couteau de découpe prévu dans ce document EP-0.732.227 effectuant aussi une coupe mécanique, ce dispositif de découpe présente les mêmes risques de foisonnement des fils dans une nappe, et donc les mêmes risques de réduction des performances du pneumatique.

De façon identique dans le document EP-0.732.227 et dans le document US-3.844.327, la barre transversale couplée au support de référence et le rouleau support ne permettent pas de maintenir parfaitement les renforts lors de leur découpe. Ainsi, lors de chaque découpe, le renfort s'enfonce dans l'épaisseur de gomme de la nappe, ce qui peut conduire à une découpe de mauvaise qualité, avec certains fils d'un renfort écrasés, étirés mais non coupés, et accentuer le phénomène de foisonnement des extrémités des fils d'un renfort.

Enfin, un autre inconvénient des dispositifs de découpe décrits dans le document EP-0.732.227 et dans le document US-3.844.327 est que les lames et le couteau sont des outils de coupe susceptibles de s'user rapidement et de nécessiter des opérations de maintenance régulières en raison de la dureté et de la résistance mécanique de certains matériaux dans lesquels sont réalisés les renforts.

L'invention a pour objectif de pallier au moins l'un des inconvénients des procédés et dispositifs de découpe de renforts qui viennent d'être décrits.

A cet effet, l'invention propose un procédé de fabrication d'une bandelette de gomme comprenant des renforts discontinus. D'une part, ce procédé de fabrication comprend au moins une étape consistant à découper les renforts d'une bandelette de gomme comprenant des renforts susceptibles d'être découpés et défilant dans une direction de convoyage, et d'autre part, ce procédé se caractérise en ce que chaque découpe d'un renfort est effectuée en chauffant le renfort localement et à distance à l'aide d'un faisceau laser. Ce procédé est tel qu'un plan transversal (PT) séparant la bandelette (12) en deux parties dans son épaisseur (E12), le faisceau laser (18) est déplacé dans au moins une direction transversale (DT) perpendiculaire à l'axe longitudinal (AL12) de la bandelette (12) et parallèle à un plan transversal (PT) de la bandelette, et en ce que le faisceau laser (18) est aussi déplacé dans une direction longitudinale (DL) parallèle à l'axe longitudinal (AL12) de la bandelette. En vue de la mise en oeuvre de ce procédé, l'invention propose aussi un dispositif de découpe des renforts d'une bandelette de gomme. Ce dispositif de découpe comprend une tête de découpe des renforts et un dispositif de convoyage permettant de faire défiler la bandelette dans une direction de convoyage et devant la tête de découpe, et ce dispositif de découpe se caractérise en ce que la tête de découpe comprend une source d'émission émettant au moins un faisceau laser permettant de chauffer chaque renfort de la bandelette localement et à distance afin de le couper.

Grâce à l'utilisation d'un faisceau laser, on obtient une bonne qualité de découpe des renforts qui n'est plus dépendante de l'état d'usure d'un outil de coupe mécanique.

De plus, l'utilisation d'un faisceau laser permet de limiter la quantité de résidus de coupe susceptibles de polluer la bandelette et donc le futur pneumatique. En effet, le faisceau laser permet de réaliser une découpe par sublimation de la matière, le matériau du renfort et la gomme de la bandelette situés dans la zone de focalisation du faisceau laser se transformant directement en gaz.

Enfin, la découpe par faisceau laser permet d'éviter le phénomène de foisonnement des fils d'un renfort dans la gomme de la bandelette. En effet, et dans la mesure où les fils d'un renfort sont réalisés dans un matériau fusible, les extrémités des fils fondent et se retrouvent soudées les unes aux autres lorsqu'elles refroidissent.

Afin de permettre la découpe des différents renforts d'une bandelette, le procédé de fabrication prévoit de déplacer le faisceau laser dans au moins une direction transversale perpendiculaire à l'axe longitudinal de la bandelette et parallèle à un plan transversal de la bandelette. A cet effet, la tête de découpe du dispositif de découpe comprend des moyens optiques d'orientation du faisceau laser permettant de déplacer le faisceau laser dans au moins une direction transversale perpendiculaire à l'axe longitudinal de la bandelette et parallèle à un plan transversal de la bandelette.

Le procédé de fabrication prévoit aussi de déplacer le faisceau laser dans une direction parallèle à l'axe longitudinal de la bandelette. A cet effet, les moyens optiques d'orientation du faisceau laser permettent aussi de déplacer le faisceau laser dans cette direction longitudinale. Ce déplacement du faisceau laser dans une direction longitudinale est utile pour compenser l'éventuel mouvement de translation de la bandelette lors de la découpe et pour optimiser les trajets du faisceau laser entre deux découpes de renforts.

Avantageusement, grâce à ces mobilités du faisceau laser et à la possibilité d'interrompre et de reprendre rapidement l'émission du faisceau laser, le procédé et le dispositif selon l'invention offrent une grande flexibilité. En effet, il suffit de commander de manière appropriée les déplacements et l'émission du faisceau laser pour modifier la distance entre deux découpes d'un même renfort dans la longueur de la bandelette, ou le décalage dans la longueur de la bandelette entre deux découpes de deux renforts adjacents, ou le décalage dans la longueur de la bandelette entre deux découpes de deux renforts voisins mais séparés par d'autres renforts.

Ensuite, le procédé de fabrication peut prévoir d'immobiliser la bandelette de gomme lors de chaque découpe d'un renfort. Mais de préférence, et en vue d'augmenter la cadence de découpe des renforts, le procédé de fabrication prévoit d'effectuer chaque découpe d'un renfort « à la volée » alors que la bandelette de gomme est animée d'un mouvement continu de translation dû à un défilement continu de la bandelette dans la direction de convoyage devant la tête de découpe du dispositif de découpe. Aussi, le dispositif de convoyage du dispositif de découpe permet de faire défiler la bandelette en continu ou pas-à-pas devant la tête de découpe.

En vue d'obtenir des découpes de qualité, le procédé de fabrication prévoit de préférence de focaliser le faisceau laser dans le plan transversal de la bandelette dans lequel s'étendent les renforts. A cet effet, le dispositif de découpe comprend des moyens de réglage de la distance de focalisation du faisceau laser.

Toujours de préférence, le procédé de fabrication prévoit que le faisceau laser est focalisé sur une distance comprise entre 200 et 500 millimètres, et la tête de découpe du dispositif de découpe comprend des moyens optiques de focalisation du faisceau laser sur une telle distance. Une telle distance de focalisation offre un bon compromis entre la densité d'énergie du faisceau à son point focal, l'énergie du faisceau étant déterminante vis-à-vis de la sublimation du renfort et donc de la qualité de découpe car plus la distance de focalisation est longue plus la densité d'énergie du faisceau laser baisse, la taille du faisceau à son point focal qui est en lien direct avec la précision de découpe, la distance devant être laissée libre au-dessus de la bandelette pour le montage de différents équipements d'aspiration et de soufflage d'air, et la surface de travail du faisceau laser, sachant que plus la distance focale est grande, plus cette surface de travail peut être étendue.

De préférence encore, et toujours en vue d'obtenir des découpes de qualité, le procédé de fabrication prévoit aussi que le tronçon de la bandelette dans lequel est effectuée la découpe au laser d'un renfort est libre de tout support, le dispositif de découpe comprenant à cet effet des moyens de suspension du tronçon de la bandelette dans lequel est effectuée la découpe au laser d'un renfort. Grâce à cette suspension, la découpe par faisceau laser n'est pas gênée par la présence d'un quelconque support et la précision de la découpe n'est pas perturbée par les frottements de la bandelette sur un quelconque support.

En vue de leur évacuation, le procédé prévoit d'aspirer les gaz issus de la découpe au laser d'un renfort. A cet effet, le dispositif de découpe est donc équipé de moyens d'aspiration de ces gaz.

Aussi divulguée est une installation de fabrication d'une bandelette de gomme comprenant des renforts discontinus. Cette installation comprend un dispositif de fabrication d'une bandelette de gomme comprenant des renforts continus et un dispositif de découpe des renforts de cette bandelette.

D'autres caractéristiques et avantages de l'invention apparaîtront dans la description qui va suivre. Cette description, donnée à titre d'exemple et non limitative, se réfère aux dessins joints en annexe et sur lesquels :
- la figure 1 est une représentation schématique en perspective d'un dispositif de découpe des renforts d'une bandelette,
- la figure 2 est une représentation schématique en coupe transversale d'une bandelette comprenant des renforts susceptibles d'être découpés avec le procédé selon l'invention,
- la figure 3 est une représentation schématique en vue de dessus d'un tronçon d'une bandelette dans lequel plusieurs renforts sont découpés avec le procédé selon l'invention,
- la figure 4 est une représentation schématique en coupe longitudinale d'une découpe d'un renfort avec le procédé selon l'invention, et
- la figure 5 est une représentation schématique d'une installation de fabrication d'une bandelette de gomme comprenant un dispositif de découpe.

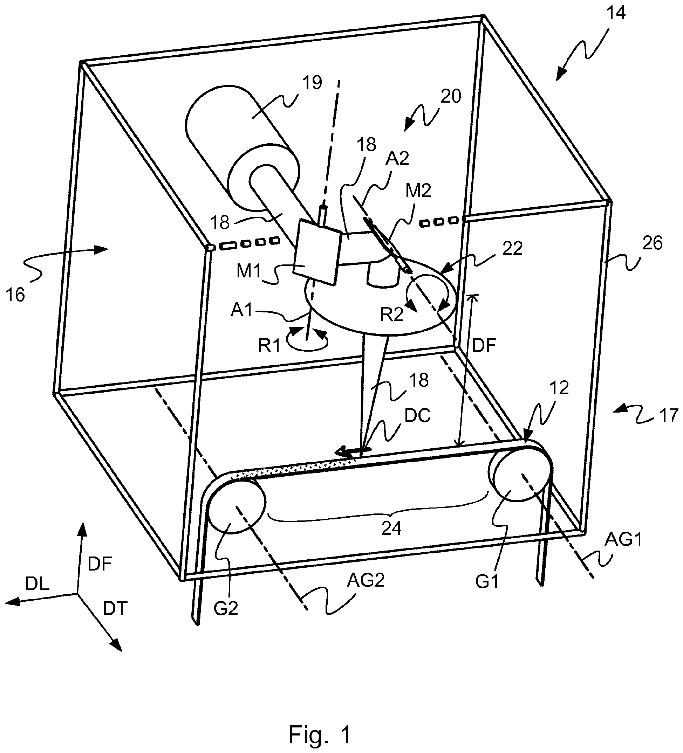

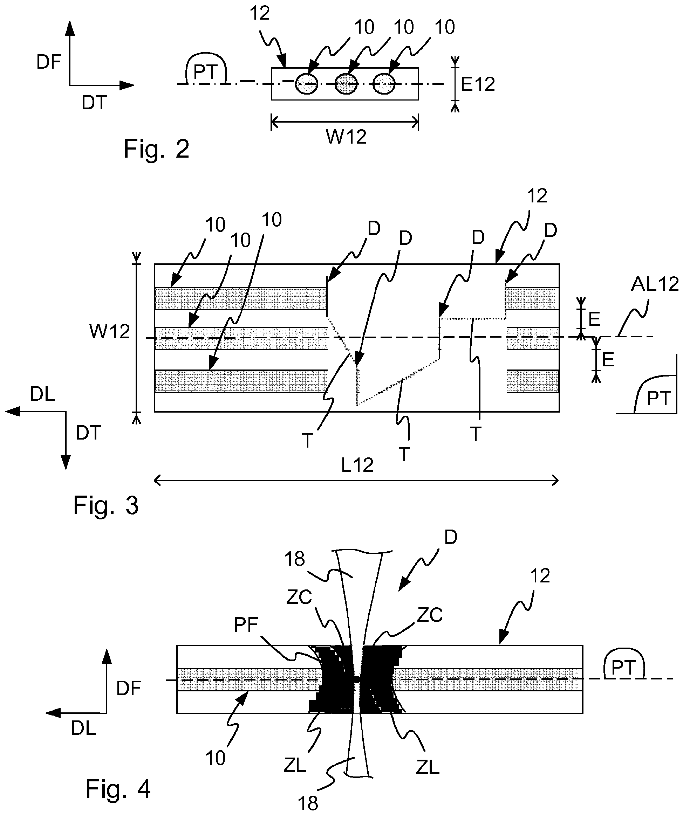

Comme l'illustrent les figures 1 et 2, l'invention est relative à la découpe des renforts 10 d'une bandelette de gomme 12.

Par bandelette, on entend une bande étroite, dont la largeur W12 est supérieure à la hauteur ou l'épaisseur E12.

Par gomme, on entend de préférence un mélange d'élastomères : caoutchouc naturel et caoutchouc synthétique, de charges renforçantes : noir de carbone et silice, de plastifiants : huiles, résines, et d'autres éléments chimiques comme le soufre par exemple.

Un renfort 10 prend la forme d'un fil ou d'un câble comprenant un ensemble de fils torsadés ou tressés. Le ou les fils constituant le renfort 10 peuvent être de nature métallique, polymérique, naturelle, ou de nature composite. Par exemple, un renfort 10 peut être fabriqué à partir de fibres de verre, de carbone, ou d'aramide.

Comme l'illustrent les figures 2 et 3, les renforts 10 d'une bandelette 12 s'étendent dans la longueur L12 de la bandelette. Plus précisément, un plan transversal PT séparant la bandelette 12 en deux parties dans son épaisseur E12, ces renforts 10 s'étendent parallèlement à l'axe longitudinal AL12 de la bandelette et dans un même plan transversal PT. De plus, ces renforts 10 sont espacés les uns des autres d'un espace E régulier dans la largeur W12 de la bandelette.

En vue de la fabrication d'une bandelette 12 avec des renforts 10 discontinus, le procédé selon l'invention prévoit au moins une étape consistant à découper les renforts 10 d'une bandelette 12 de gomme comprenant des renforts 10 susceptibles d'être découpés, et de préférence initialement continus, et défilant dans une direction de convoyage DC illustrée par une flèche en figure 1. Plus en détail, chaque découpe D d'un renfort 10 est effectuée en chauffant le renfort 10 localement et à distance à l'aide d'un faisceau laser.

Pour la mise en oeuvre de ce procédé, l'invention propose un dispositif de découpe 14 tel qu'illustré en figure 1 et comprenant une tête de découpe 16 des renforts 10 et un dispositif de convoyage 17 permettant de faire défiler la bandelette 12 dans la direction de convoyage DC et devant la tête de découpe 16. Plus en détail, cette tête de découpe 16 comprend une source d'émission 19 émettant au moins un faisceau laser 18 permettant de chauffer chaque renfort 10 de la bandelette localement et à distance afin de le couper.

Comme une bandelette 12 comprend plusieurs renforts 10 juxtaposés dans un même plan transversal PT, le procédé prévoit de déplacer le faisceau laser 18 dans au moins une direction transversale DT perpendiculaire à l'axe longitudinal AL12 de la bandelette 12 et parallèle à un plan transversal PT de la bandelette. Ainsi, et comme l'illustre la figure 3, le faisceau laser 18 permet de réaliser différentes découpes D de différents renforts 10 pris dans la largeur W12 de la bandelette.

En vue de ce déplacement transversal du faisceau laser 18, la tête de découpe 16 du dispositif de découpe 14 comprend des moyens optiques d'orientation 20 du faisceau laser permettant de déplacer le faisceau laser 18 dans au moins une direction transversale DT perpendiculaire à l'axe longitudinal AL12 de la bandelette et parallèle à un plan transversal PT de la bandelette.

En complément, le procédé prévoit aussi de déplacer le faisceau laser 18 dans une direction longitudinale DL parallèle à l'axe longitudinal AL12 de la bandelette. A cet effet, les moyens optiques d'orientation 20 du faisceau laser permettent aussi de déplacer le faisceau laser 18 dans une direction longitudinale DL parallèle à l'axe longitudinal AL12 de la bandelette. Ainsi, le faisceau laser 18 peut suivre un trajet T purement longitudinal ou combinant un déplacement transversal et un déplacement longitudinal entre deux découpes D différentes, comme le montre la figure 3. Bien entendu, lors d'un trajet T entre deux découpes D, l'émission du faisceau laser 18 est interrompue.

Selon un autre avantage, le déplacement longitudinal du faisceau laser 18 permet de compenser une translation de la bandelette 12 dans la direction de convoyage DC pendant la réalisation d'une découpe D.

En effet, le procédé peut prévoir que la bandelette 12 de gomme est animée d'un mouvement continu de translation dans la direction de convoyage DC lors de chaque découpe D d'un renfort 10, ceci pour augmenter la cadence de réalisation de ces découpes D. Alternativement, et par exemple pour privilégier la qualité de réalisation d'une découpe D, le procédé peut prévoir d'immobiliser la bandelette 12 de gomme lors de chaque découpe D d'un renfort 10. Aussi, le dispositif de convoyage 17 permet de faire défiler la bandelette 12 en continu ou pas-à-pas devant la tête de découpe 16.

D'un point de vue général, la combinaison des déplacements longitudinaux et transversaux du faisceau laser 18 permet d'optimiser les trajets T du faisceau laser 18 entre les différentes découpes D de renforts 10 de manière à augmenter la cadence de réalisation de ces découpes D, et donc la vitesse de fabrication d'une bandelette à renforts discontinus.

Pour permettre de tels déplacements longitudinaux et transversaux du faisceau laser 18, les moyens optiques d'orientation 20 du faisceau laser prennent de préférence la forme de deux miroirs M1,M2 mobiles, les miroirs M1,M2 étant orientés de façon que le premier miroir M1 reçoive le faisceau laser 18 depuis la source d'émission 19 et réfléchisse ce faisceau laser 18 vers le second miroir M2. De plus, le second miroir M2 est orienté de manière à réfléchir le faisceau laser vers la bandelette 12.

De préférence, le premier miroir M1 est monté mobile en rotation R1 autour d'un premier axe A1 perpendiculaire à un second axe A2 autour duquel le second miroir M2 est monté en rotation R2. Plus en détail, l'axe de rotation A1 du premier miroir M1 est perpendiculaire à la direction longitudinale DL et à la direction transversale DT, tandis que l'axe de rotation R2 du second miroir M2 est parallèle à la direction transversale DT. Ainsi, la rotation R1 du premier miroir M1 permet de contrôler les déplacements transversaux du faisceau laser 18, tandis la rotation R2 du second miroir M2 permet de contrôler les déplacements longitudinaux du faisceau laser 18.

Afin d'obtenir un pilotage rapide et précis des rotations R1,R2 de ces deux miroirs M1,M2, chacun de ses miroirs est entrainé en rotation par un moteur de type galvanométrique.

Par déplacements longitudinaux et transversaux du faisceau laser 18, on entend plus précisément des déplacements longitudinaux et transversaux du point focal PF du faisceau laser 18.

En effet, en vue de la réalisation d'une découpe D, le faisceau laser 18 est focalisé. Cette focalisation permet de concentrer l'énergie du faisceau et donc d'emmener le renfort 10 à une température de chauffe suffisante pour le découper par sublimation.

Afin d'obtenir un bon compromis entre la densité d'énergie du faisceau à son point focal PF, la taille du faisceau laser 18 à son point focal PF, la distance disponible au-dessus de la bandelette 12 pour le montage de différents équipements, et la surface de travail du faisceau laser 18, le procédé prévoit de focaliser le faisceau laser 18 sur une distance de focalisation DF comprise entre 200 et 500 millimètres. A cet effet, la tête de découpe 16 du dispositif de découpe 14 comprend des moyens optiques de focalisation 22 du faisceau laser 18 sur une distance de focalisation DF comprise entre 200 et 500 millimètres. De préférence, ces moyens optiques de focalisation 22 du faisceau laser 18 prennent la forme d'une lentille optique. Au sein de la tête de découpe 16, cette lentille optique est disposée de manière à être traversée par le faisceau laser 18 après qu'il ait été réfléchi par les miroirs M1,M2 des moyens optiques d'orientation 20. Bien entendu, la distance de focalisation DF comprise entre 200 et 500 millimètres offre un bon compromis avec les types de faisceau laser 18 utilisés pour la mise en oeuvre de l'invention, ces types de faisceau laser 18 étant définis ultérieurement dans la présente description.

Les moyens optiques d'orientation 20 du faisceau laser permettant de contrôler précisément les déplacements du point focal PF du faisceau laser 18 dans les directions longitudinales DL et transversales DT, le dispositif de découpe 14 comprend aussi des moyens de réglage, non illustrés sur les figures, de la distance de focalisation DF du faisceau laser 18. Ces moyens de réglage permettent de contrôler précisément les déplacements du point focal PF du faisceau laser 18 dans une direction verticale DV perpendiculaire aux directions longitudinales DL et transversales DT, et par rapport au plan transversal PT situé dans l'épaisseur E12 de la bandelette et dans lequel s'étendent les renforts 10.

Différents moyens de réglage peuvent permettre d'ajuster la position du point focal PF du faisceau laser 18 dans la direction verticale DV.

Dans une première variante, il peut être prévu un dispositif agissant sur la lentille optique des moyens optiques de focalisation 22, ce dispositif permettant par exemple de modifier mécaniquement la position de cette lentille dans la direction verticale DV.

Dans une autre variante, éventuellement combinable avec la première, un dispositif permet de modifier la position dans la direction verticale DV d'un tronçon 24 de la bandelette 12 dans lequel est effectuée la découpe D d'un renfort 10. Avantageusement, le dispositif de convoyage 17 permet de modifier la position du tronçon 24 dans la direction verticale DV.

Globalement, un contrôle précis des déplacements du point focal PF du faisceau laser 18 dans les trois directions transversale DT, longitudinale DL et verticales DV permet de s'assurer de la qualité de la découpe D de chaque renfort 10, notamment en permettant de sublimer la matière du renfort 10 et de fusionner les fils d'un renfort 10 prenant la forme d'un câble.

Comme l'illustre la figure 4, lors de la réalisation d'une découpe D, le procédé prévoit de préférence de focaliser le faisceau laser 18 dans le plan transversal PT dans lequel se situent les renforts 10 à découper. En positionnant ainsi le point focal PF du faisceau laser 18, soit la portion du faisceau dans laquelle l'énergie du faisceau est la plus concentrée dans l'âme du renfort 10 à découper, on utilise au mieux la puissance de la source d'émission 19 et on s'assure de la réalisation d'une découpe D optimale par sublimation de matière.

Plus en détail, lors de la découpe D d'un renfort 10 avec un faisceau laser 18 focalisé dans le plan transversal PT dans lequel se situent les renforts 10 à découper, le faisceau laser 18 entraine la sublimation d'une zone centrale ZC englobant un segment du renfort 10 et la gomme de la bandelette 12 qui entoure ce segment. Parallèlement, le faisceau laser 18 affecte aussi thermiquement deux zones latérales ZL situées de part et d'autre de la zone centrale ZC. C'est plus précisément au sein de ces zones latérales ZL que les extrémités des fils d'un renfort 10 prenant la forme d'un câble fusionnent et se retrouvent soudées les unes aux autre en refroidissant.

Comme l'illustre la figure 3, en raison de la focalisation du faisceau laser 18, la découpe D d'un renfort 10 nécessite un déplacement transversal DT du faisceau laser 18. En effet, le diamètre du faisceau laser 18 à son point focal PF est d'environ 10 micromètres, tandis que le diamètre d'un renfort 10 se situe aux alentours de 0,4 à 0,6 millimètre.

Le faible diamètre du faisceau laser 18 focalisé offre une précision de découpe inférieure à 0,01 millimètre et permettant d'éviter d'endommager le renfort 10 adjacent au renfort 10 découpé, ou tout autre élément longitudinal juxtaposé dans la bandelette avec le renfort découpé.

De préférence, le type de laser utilisé : pulsé, continu ou autre, est choisi en fonction de la section de ce renfort 10 et du type de matériau(x) du ou des fils constituant ce renfort 10, chaque matériau ayant sa propre température de sublimation et absorbant plus ou moins certaines longueurs d'onde.

A titre d'exemple, pour obtenir la sublimation de renforts 10 métalliques de 0,2 à 0,7 millimètre de diamètre, il est préférable d'utiliser un faisceau laser 18 en mode continu à fibre dopée l'Ytterbium, avec une source d'émission d'une puissance d'au moins 250 W et une longueur d'onde comprise entre 1000 nanomètres et 1100 nanomètres. Et, pour obtenir la sublimation de renforts 10 amétalliques, par exemple fabriqués à partir de fibres d'aramide ou de PET (Polytéréphtalate d'éthylène), il est préférable d'utiliser un faisceau laser 18 au CO₂, avec une source d'émission d'une puissance d'au moins 100 W et une longueur d'onde comprise entre 9350 nanomètres et 10740 nanomètres.

Toujours en vue d'obtenir des découpes D de qualité, le procédé prévoit aussi de libérer de tout support le tronçon 24 de la bandelette 12 dans lequel est effectuée la découpe D au laser d'un renfort 10. A cet effet, le dispositif de découpe 14 comprend des moyens de suspension du tronçon 24 de la bandelette 12 dans lequel est effectuée la découpe D au laser d'un renfort 10. De préférence, ces moyens de suspension sont formés par le dispositif de convoyage 17 qui comprend au moins deux galets G1,G2 de convoyage de la bandelette 12. Ces deux galets G1,G2 étant distants l'un de l'autre dans la direction longitudinale DL, le tronçon 24 suspendu de la bandelette 12 s'étend entre ces deux galets. Plus en détail, ces deux galets G1,G2 sont montés respectivement libres en rotation et en roue libre autour d'axes respectifs AG1,AG2 parallèles à la direction transversale DT, et disposés de part et d'autre de la zone de tir ou de travail du faisceau laser 18.

De préférence, la bandelette 12 est entraînée en translation dans la direction de convoyage DC par un système d'entrainement (non représenté sur les figures) prévu en aval du galet G2. Avantageusement, les galets peuvent être équipés de flasques latéraux (non représentés sur les figures) pour guider la bandelette 12, et/ou de contre-galets (non représentés sur les figures) permettant aussi d'améliorer le contrôle du guidage de la bandelette.

De préférence encore, un système de mise en tension (non représenté sur les figures) de la bandelette 12 est prévu en amont du galet G1. Ainsi, le tronçon 24 suspendu de la bandelette est mis en tension et les différents renforts 10 situés dans ce tronçon 24 de la bandelette sont bien alignés dans le plan transversal PT dans lequel est focalisé le faisceau laser 18, et plus particulièrement dans la direction transversale DT, ce qui permet de garantir la qualité des découpes D de ces renforts.

La sublimation de matière entrainant des dégagements gazeux pouvant être nocifs ou simplement polluants, le procédé prévoit d'aspirer les gaz issus de la découpe D au laser d'un renfort 10. Avantageusement, cette aspiration permet aussi d'aspirer les éventuels résidus de combustion de la matière située dans les zones latérales ZL affectées thermiquement. En vue de la mise oeuvre de cette aspiration, le dispositif de découpe 14 comprend des moyens d'aspiration, tel un conduit d'aspiration relié à un aspirateur, des gaz issus de la découpe D au laser d'un renfort 10.

Dans un objectif similaire de protection des personnes et de son environnement, le dispositif de découpe 14 est de préférence logé dans une enceinte fermée 26.

En vue de protéger la lentille des moyens optiques de focalisation 22 d'éventuelles projections lors de la sublimation du matériau d'un renfort 10 ou de la gomme de la bandelette 12, le procédé prévoit d'installer un rideau d'air sous cette lentille. Au sein du dispositif de découpe 14, ce rideau d'air est par exemple mis en oeuvre avec des buses plates alimentées en air comprimé et délivrant un flux d'air perpendiculaire au faisceau laser 18 et orienté vers la bandelette 12 de manière à repousser les éventuelles projections lors de la réalisation d'une découpe D.

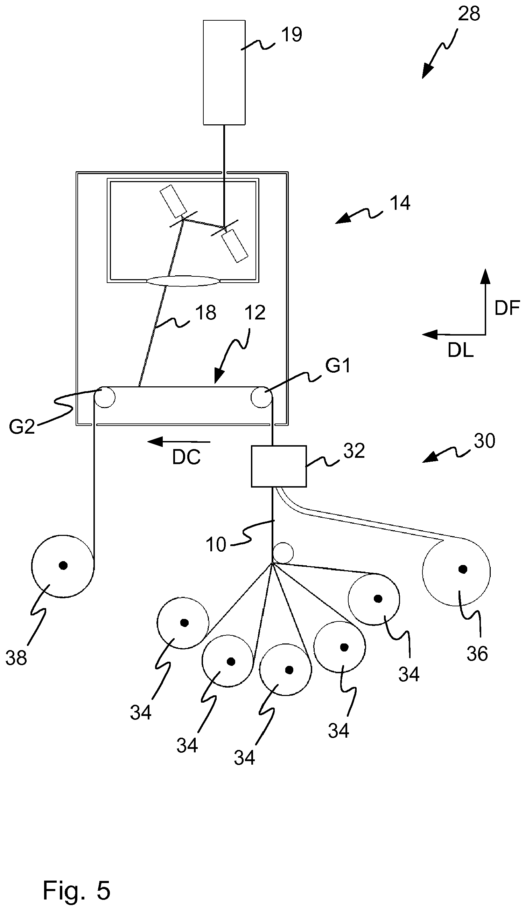

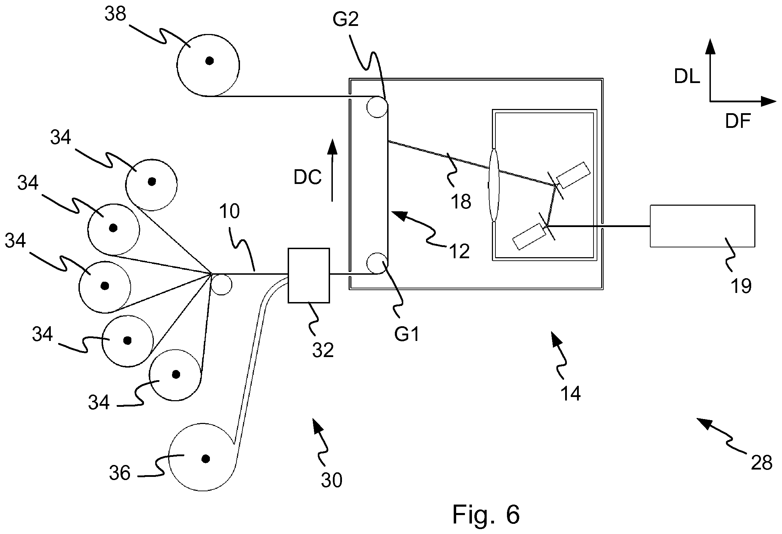

La présente invention couvre aussi une installation de fabrication 28 d'une bandelette 12 de gomme comprenant des renforts 10 discontinus. Une telle installation de fabrication 28, illustrée en figure 5, comprend un dispositif de fabrication 30 d'une bandelette 12 de gomme comprenant des renforts 10 continus et un dispositif de découpe 14 des renforts 10 de cette bandelette 12. Par exemple, le dispositif de fabrication 30 est un dispositif de calandrage ou d'extrusion 32 alimenté par des bobines 34 de renfort 10 et une bobine 36 de gomme. Avantageusement, l'installation de fabrication 28 comprend aussi une bobine de stockage 38 de la bandelette 12 à renforts discontinus en sortie du dispositif de découpe 14.

Dans une application visée par la présente invention, la bandelette de gomme 12 à renforts 10 discontinus est utilisée pour réduire l'épaisseur de gomme dans la partie basse du flanc d'un pneumatique. Pour donner un ordre d'idées, une bandelette de gomme 12 utilisée dans une telle application a par exemple une largeur W12 de 10 millimètres et une épaisseur E12 de 0,8 millimètre, et cette bandelette comprend quatorze renforts 10 parallèles de 0,4 millimètre de diamètre, un espace de 0,3 millimètre séparant deux renforts 10 adjacents dans la largeur W12 de la bandelette 12. Pour donner un ordre d'idées, grâce à la présente invention, une telle bandelette 12 peut être fabriquée à une vitesse de 200 millimètres par seconde.

Dans d'autres applications prévues par l'invention, la bandelette de gomme 12 à renforts 10 discontinus est utilisée pour confectionner une autre partie du flanc d'un pneumatique, les épaules d'un pneumatique ou le sommet d'un pneumatique.

D'une part, la présence de renforts 10 dans une bandelette permet d'améliorer les propriétés mécaniques, comme par exemple la rigidité, de la partie du pneumatique réalisée à partir de cette bandelette, ce qui permet de réduire l'épaisseur de gomme dans cette partie du pneumatique, et donc généralement d'améliorer le comportement et les performances du pneumatique.

Et d'autre part, la discontinuité des renforts 10 autorise un étirement de la bandelette supérieur à l'étirement d'une bandelette qui comprendrait les mêmes renforts mais continus. Ainsi, la bandelette 12 à renforts 10 discontinus peut être utilisée pour confectionner certaines parties d'un pneumatique, comme par exemple la partie basse du flanc d'un pneumatique, destinées à subir une déformation à cru par étirement lors d'une étape de fabrication du pneumatique, et notamment lors de l'étape dite de conformation de l'ébauche du futur pneumatique.

## Revendications

1. Procédé de fabrication d'une bandelette (12) de gomme comprenant des renforts (10) discontinus, le procédé de fabrication comprenant au moins une étape consistant à découper les renforts (10) d'une bandelette (12) de gomme comprenant des renforts (10) susceptibles d'être découpés et défilant dans une direction de convoyage (DC), le procédé de fabrication étant **caractérisé en ce que** chaque découpe (D) d'un renfort (10) est effectuée en chauffant le renfort (10) localement et à distance à l'aide d'un faisceau laser (18), **en ce que** un plan transversal (PT) séparant la bandelette (12) en deux parties dans son épaisseur (E12), le faisceau laser (18) est déplacé dans au moins une direction transversale (DT) perpendiculaire à l'axe longitudinal (AL12) de la bandelette (12) et parallèle à un plan transversal (PT) de la bandelette, et **en ce que** le faisceau laser (18) est aussi déplacé dans une direction longitudinale (DL) parallèle à l'axe longitudinal (AL12) de la bandelette.

2. Procédé de fabrication d'une bandelette (12) de gomme selon la revendication 1, dans lequel la bandelette (12) de gomme est immobilisée lors de chaque découpe (D) d'un renfort (10).

3. Procédé de fabrication d'une bandelette (12) de gomme selon la revendication 1, dans lequel la bandelette (12) de gomme est animée d'un mouvement continu de translation dans la direction de convoyage (DC) lors de chaque découpe (D) d'un renfort (10).

4. Procédé de fabrication d'une bandelette (12) de gomme selon l'une des revendications précédentes, dans lequel le faisceau laser (18) est focalisé dans un plan transversal (PT) de la bandelette dans lequel s'étendent les renforts (10).

5. Procédé de fabrication d'une bandelette (12) de gomme selon l'une des revendications précédentes, dans lequel le faisceau laser (18) est focalisé sur une distance de focalisation (DF) comprise entre 200 et 500 millimètres.

6. Procédé de fabrication d'une bandelette (12) de gomme selon l'une des revendications précédentes, dans lequel le tronçon (24) de la bandelette dans lequel est effectuée la découpe (D) au laser d'un renfort (10) est libre de tout support.

## Patentansprüche

1. Verfahren zur Herstellung eines Streifens (12) aus Kautschuk mit unterbrochenen Verstärkungen (10), wobei das Verfahren zur Herstellung zumindest einen Schritt umfasst, der darin besteht die Verstärkungen (10) eines Streifens (12) aus Kautschuk, der Verstärkungen (10) umfasst, die durchschnitten werden können und in einer Förderrichtung (DC) verlaufen, zu durchschneiden, wobei das Herstellungsverfahren **dadurch gekennzeichnet ist, dass** jedes Durchschneiden (D) einer Verstärkung (10) ausgeführt wird, indem die Verstärkung (10) mithilfe eines Laserstrahls (18) lokal und aus der Entfernung erhitzt wird, und dadurch, dass eine Querebene (PT) den Streifen (12) in seiner Dicke (E12) in zwei Teile teilt, wobei der Laserstrahl (18) in zumindest einer Querrichtung (DT) senkrecht zur Längsachse (AL12) des Streifens (12) und parallel zu einer Querebene (PT) des Streifens bewegt wird, und dadurch, dass der Laserstrahl (18) außerdem in einer Längsrichtung (DL) parallel zur Längsachse (AL12) des Streifens bewegt wird.

2. Verfahren zur Herstellung eines Streifens (12) aus Kautschuk nach Anspruch 1, wobei der Streifen (12) aus Kautschuk bei jedem Durchschneiden (D) einer Verstärkung (10) fixiert ist.

3. Verfahren zur Herstellung eines Streifens (12) aus Kautschuk nach Anspruch 1, wobei der Streifen (12) aus Kautschuk bei jedem Durchschneiden (D) einer Verstärkung (10) in einer kontinuierlichen Translationsbewegung in der Förderrichtung (DC) bewegt wird.

4. Verfahren zur Herstellung eines Streifens (12) aus Kautschuk nach einem der vorangehenden Ansprüche, wobei der Laserstrahl (18) in eine Querebene (PT) des Streifens, in der sich die Verstärkungen (10) befinden, fokussiert ist.

5. Verfahren zur Herstellung eines Streifens (12) aus Kautschuk nach einem der vorangehenden Ansprüche, wobei der Laserstrahl (18) über einen Fokussierabstand (DF) von 200 bis 500 Millimeter fokussiert ist.

6. Verfahren zur Herstellung eines Streifens (12) aus Kautschuk nach einem der vorangehenden Ansprüche, wobei der Abschnitt (24) des Streifens, in dem das Durchschneiden (D) einer Verstärkung (10) mit dem Laser erfolgt, frei von jeglicher Unterstützung ist.

## Claims

1. Method of manufacturing a strip (12) of rubber comprising discontinuous reinforcers (10), the method of manufacture comprising at least one step consisting in cutting the reinforcers (10) of a strip (12) of rubber comprising reinforcers (10) capable of being cut and progressing in a direction of conveying (DC), the method of manufacture being **characterized in that** each cutting (D) of a reinforcer (10) is performed by heating the reinforcer (10) locally and remotely using a laser beam (18), **in that** a transverse plane (PT) dividing the strip (12) into two parts in its thickness (E12), the laser beam (18) is moved in at least one transverse direction (DT) perpendicular to the longitudinal axis (AL12) of the strip (12) and parallel to a transverse plane (PT) of the strip, and **in that** the laser beam (18) is also moved in a longitudinal direction (DL) parallel to the longitudinal axis (AL12) of the strip.

2. Method of manufacturing a strip (12) of rubber according to claim 1, in which the strip (12) of rubber is immobilized during each cutting (D) of a reinforcer (10).

3. Method of manufacturing a strip (12) of rubber according to claim 1, in which the strip (12) of rubber undergoes a continuous translational movement in the direction of conveying (DC) during each cutting (D) of a reinforcer (10).

4. Method of manufacturing a strip (12) of rubber according to one of the preceding claims, in which the laser beam (18) is focused in a transverse plane (PT) of the strip in which plane the reinforcers (10) extend.

5. Method of manufacturing a strip (12) of rubber according to one of the preceding claims, in which the laser beam (18) is focused at a focal distance (F) comprised between 200 and 500 millimetres.

6. Method of manufacturing a strip (12) of rubber according to one of the preceding claims, in which the portion (24) of strip in which the laser cutting (D) of a reinforcer (10) is performed is free of any support.
